# FASCICULE DE BREVET EUROPEEN

(11) **EP 0 744 482 B1**
(45) Date de publication et mention de la délivrance du brevet: **11.07.2001**
(21) Numéro de dépôt: 96420188.3
(22) Date de dépôt: 23.05.1996
(51) Int. Cl.: D03C 1/14

(54) **Agrafe réglable pour l'assemblage pivotant des bras oscillants d'une mécanique d'armure avec les bielles d'attaque du système de tirage**
Verstellbare Klammer für die Schwenkverbindung der Schwingarme einer Schaftmaschine mit den Hebeln des Hebesystems
Adjustable clip to connect the rocking levers of a dobby to the rods of the lifting system

(30) Priorité: 24.05.1995 FR 9506416
(43) Date de publication de la demande: 27.11.1996
(73) Titulaire: STAUBLI FAVERGES, 74210 Faverges (FR)
(72) Inventeur: Froment, Jean-Paul, 74210 Doussard (FR); Fumex, André, 74290 Talloires (FR)
(74) Mandataire: Colombet, Alain André

(56) Documents cités:
- EP-A- 0 252 177
- EP-A- 0 633 335
- FR-A- 2 398 136

## Description

La présente invention a trait aux mécaniques d'armure pour la formation de la foule sur les métiers à tisser et elle concerne plus particulièrement les agrafes réglables qui assurent l'assemblage pivotant des bras oscillants de la mécanique avec les bielles d'attaque du système de tirage associé aux cadres de lisses du métier.

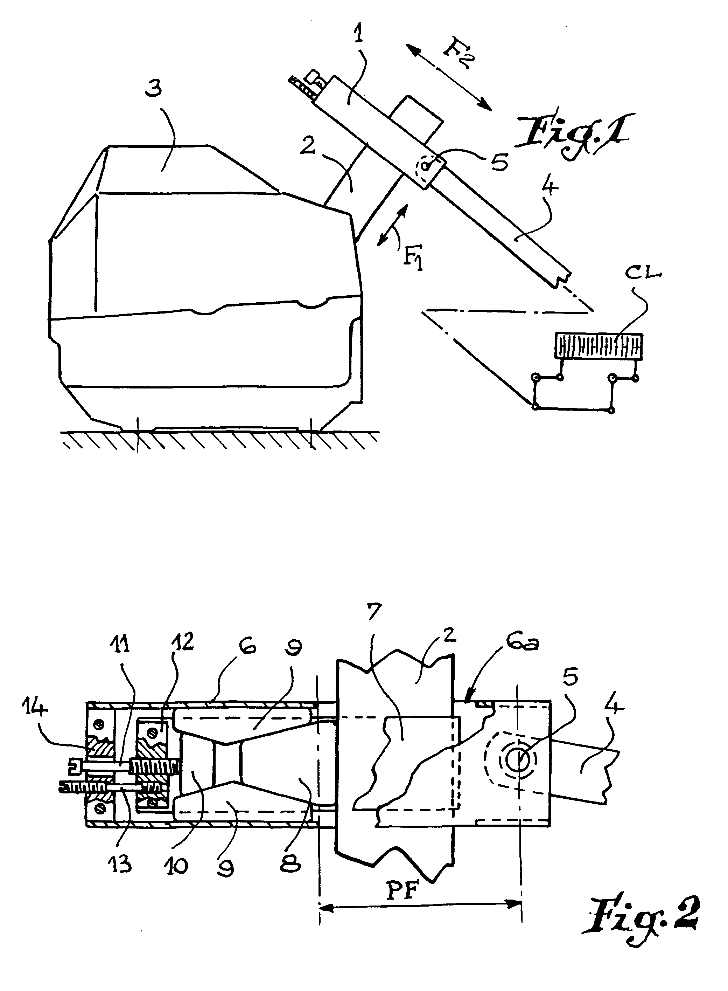

Ainsi qu'on l'a très schématiquement rappelé à la fig. 1 du dessin annexé aux présentes, une telle agrafe, référencée 1, est susceptible d'être immobilisée à une position quelconque le long de l'axe de l'un des bras oscillants 2 (flèche F1) de la mécanique 3, ce qui permet de régler l'amplitude de la course verticale du cadre de lisses CL qui est attelé à la bielle d'attaque 4. Par ailleurs le point d'attelage 5 porté par l'agrafe 1 pour l'articulation de la bielle 4 peut être déplacé suivant la flèche F2, en autorisant de la sorte le réglage de la hauteur du cadre CL par rapport au métier à tisser.

Le document FR-A-2 398 136 (STAUBLI) montre une agrafe réglable constituée par une pièce tubulaire 6 (voir fig. 2) formant bâti, qui porte à l'une de ses extrémités l'axe 5 du point d'attelage. Cette pièce 6 est découpée d'une échancrure 6a qui est traversée avec un large jeu par le bras oscillant 2 considéré, lequel est entouré sur trois côtés par le fond d'un étrier 7 orienté axialement à l'intérieur de la pièce 1 et mobile dans celle-ci à la manière d'un coulisseau. L'immobilisation de cet étrier ou coulisseau 7 le long du bras 2 est assurée par un mors 8 commandé par deux rampes latérales opposées 9 elles-mêmes actionnées à l'aide d'un coin central 10. Ce dernier est associé à une vis de poussée 11 vissée dans le taraudage d'un dé 12 solidaire des extrémités libres des ailes de l'étrier 7 ; ce dé 12 reçoit l'action d'une vis de réglage 13 à deux filets opposés qui coopère avec une entretoise 14 portée par l'extrémité de la pièce 6 opposée à celle équipée de l'axe ou point 5.

On comprend que la vis 13 permet le réglage de la position axiale de la pièce 6 par rapport au coulisseau ou étrier 7 et, en conséquence, du point 5 par rapport à la bielle 4, tandis que la manoeuvre de la vis 11 assure l'immobilisation de cette pièce 6 à la hauteur désirée le long du bras 2.

Il convient toutefois d'observer que les flasques latéraux de la pièce tubulaire 6 travaillent en porte-à-faux sur la distance PF séparant l'axe 5 du bord de l'échancrure 6a tourné du côté de l'entretoise 14 alors que sur ces flasques s'exercent des efforts transversaux et axiaux très importants, induits par l'inclinaison essentiellement variable de la bielle 4. Comme la disposition côte à côte très rapprochée des bras oscillants 2 de la mécanique 3 interdit en pratique tout surépaississement de renfort, les flasques précités parviennent à se rompre et les performances de la mécanique se trouvent en pratique limitées.

Dans le but de remédier à cet inconvénient on a proposé, notamment dans les documents EP-A-0 633 335 (STAUBLI) qui représente l'état de la technique le plus proche, et EP-A-0 252 177 (KAISER), de faire comporter au bâti ajouré des mors mobiles de serrage disposés à l'intérieur de l'étrier de part et d'autre du bras et d'agencer le mécanisme de manoeuvre de façon à ce qu'il agisse simultanément sur l'ensemble des mors.

Si une telle structure permet bien d'éliminer pratiquement tout porte-à-faux dans la fixation de l'agrafe contre le bras oscillant auquel elle est associée, il n'en reste pas moins qu'on se heurte encore à des défauts sensibles, qui tiennent, dans le cas de EP-A-0 633 335 à l'usure causée par le jeu nécessairement prévu entre les pièces constitutives, dans le cas de EP-A-0 252 177 à la complexité et à la fragilité des différents éléments de l'ensemble.

C'est à ces inconvénients non négligeables qu'entend remédier la présente invention qui a pour objet l'agrafe réglable qui est définie à la revendication 1.

Le dessin annexé, donné à titre d'exemple, permettra de mieux comprendre l'invention, les caractéristiques qu'elle présente et les avantages qu'elle est susceptible de procurer :

Comme indiqué plus haut, fig. 1 illustre la fonction d'une agrafe réglable tandis que fig. 2 reflète la technique antérieure révélée par le document FR-A-2 398 136 visé plus haut.

Fig. 3 est une vue de côté avec arrachements, représentant une agrafe établie conformément à la présente invention.

Fig. 4 montre en perspective, préalablement à leur montage, les différents éléments constitutifs de l'agrafe suivant fig. 3.

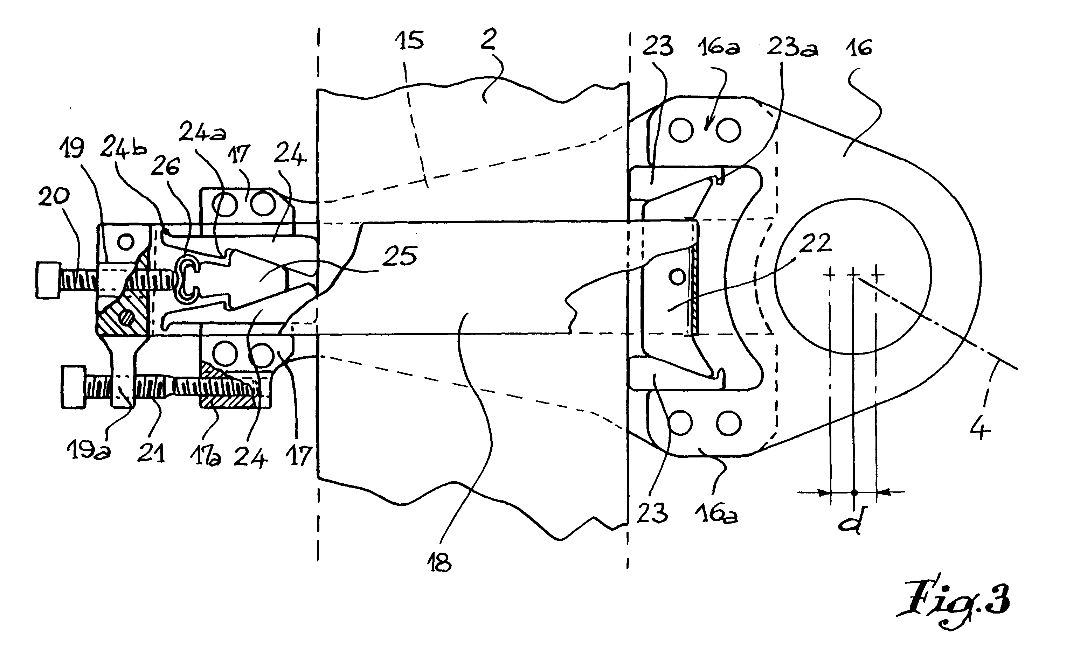

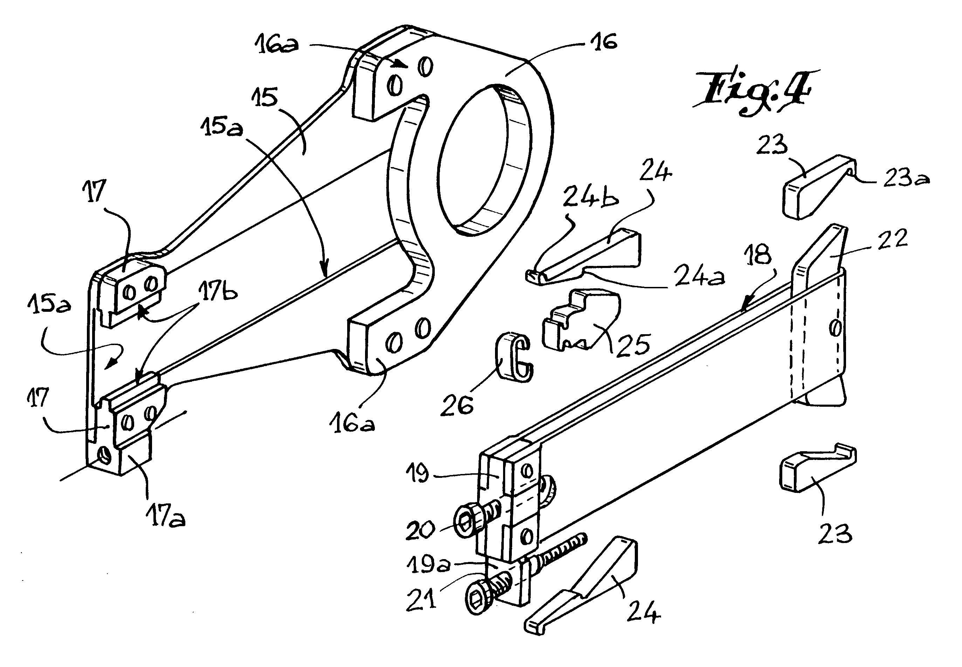

L'agrafe représentée en fig. 3 et 4 comprend une pièce principale 15 formant bâti, constituée par une semelle contre l'une des faces de laquelle sont rapportés, par rivetage dans l'exemple de réalisation envisagé, d'une part un oeilleton 16 destiné à recevoir l'axe pour l'attelage articulé de la bielle d'attaque 4 du système de tirage associé à la mécanique, d'autre part (en fait au voisinage de l'extrémité opposée de la semelle) deux guides en saillies 17. On observera que l'oeilleton 16 présente lui-même deux parties surélevées 16a formant également guides, comme on le comprendra mieux plus loin.

Au bâti 15 ainsi agencé est associé un coulisseau 18 en forme d'étrier qui s'ouvre à l'opposé de l'oeilleton 16 ; les extrémités libres des deux ailes de ce coulisseau 18 sont réunies l'une à l'autre par une entretoise 19 percée d'un taraudage central à l'intérieur duquel est engagée une vis de poussée 20. Dans une oreille latérale 19a de l'entretoise 19 est vissé l'un des deux filets opposés d'une vis double de réglage 21, l'autre filet coopérant avec un taraudage pratiqué dans une oreille latérale 17a de l'un des deux guides 17 du bâti 15.

Le fond de l'étrier 18 est équipé d'un coin débordant 22 dont les bords obliques coopèrent avec deux mors profilés 23 qui prennent latéralement appui contre les guides 16a. De la même manière, les guides 17 forment appuis pour deux mors profilés 24 coopérant avec un coin central 25. On notera qu'un ressort 26 est interposé entre les extrémités en vis-à-vis du coin 25 et de la vis de poussée 20.

Le fonctionnement comme le mode d'emploi de l'agrafe qui vient d'être décrite découlent des explications qui précédent et se comprennent aisément.

L'agrafe à l'état monté est en premier lieu engagée sur le bras oscillant 2 qui lui est destiné ; pour cela il suffit d'introduire l'étrier 18 sur le bras 2 qui vient se loger entre les deux ailes dudit étrier, dans la portion de celui-ci comprise entre le mors central 22 et les deux mors latéraux 24.

Puis la vis 20 est légèrement serrée pour transmettre au coin 25, par l'intermédiaire du ressort 26, et de là aux deux mors 24, une légère pression. En même temps, la vis 20 agit, par traction sur l'étrier via l'entretoise 19, sur le coin 22 et, de là, sur les mors 23. Ainsi, le serrage réduit de la vis 20 évite provisoirement le coulissement de l'agrafe le long du bras 2, la légère friction obtenue compensant l'effet de gravité jusqu'au moment du serrage complet.

Puis l'opérateur manoeuvre la vis de réglage 21 pour déplacer le bâti 15, et en conséquence l'oeilleton 16 (distance d de fig. 3), par rapport à l'étrier en fonction de la hauteur désirée pour le cadre de lisses CL.

Enfin, l'opérateur serre la vis 20 pour assurer le blocage final de l'agrafe,c'est-à-dire fixer d'une part sa position le long du bras 2 en fonction de l'amplitude de la course désirée pour le cadre de lisses CL considéré, et d'autre part la position de l'oeilleton 16. Ce double blocage résulte de l'action simultanée des rampes des coins 22 et 25 sur les rampes conjuguées des mors 23 et 24, la vis 20 poussant le coin central 25 en direction du fond de l'étrier tout en tirant le coin 22 dans le sens opposé.

Si finalement ce mode d'emploi est pratiquement identique à celui des agrafes antérieures suivant fig. 2, on obtient néanmoins une robustesse bien supérieure, sans que l'encombrement soit sensiblement modifié. Le serrage opéré de part et d'autre du bras 2 à l'aide des mors 23 et 24 prenant appui contre les guides ou portées 16a et 17 parfaitement rigides s'oppose à tout fléchissement intempestif, quelles que soient les sollicitations imparties à l'oeilleton 16 par la bielle 4 lors du fonctionnement du métier. Tout effet pernicieux de porte-à-faux est du même coup éliminé, alors que la construction reste simple, ne nécessitant au surplus aucun jeu susceptible d'engendrer une usure prématurée des pièces.

Il n'est pas sans intérêt d'observer que le guidage du bâti 15 sur le coulisseau ou étrier 18 est avantageusement amélioré en faisant comporter d'une part audit bâti une dépression longitudinale référencée 15a en fig. 4, et d'autre part aux guides 17 une saillie ou talon 17b apte à s'engager entre les deux ailes dudit étrier.

On peut noter encore que les mors 23 et 24 présentent avantageusement des becs d'imperdabilité assurant leur maintien en position quand l'agrafe n'est pas sur le levier. Ainsi, chaque mors 23 comporte un bec 23a, dirigé vers le mors 23 opposé, à son extrémité opposée au bras 2. Chaque mors 24, quant à lui, comporte à peu près à mi-longueur, derrière le coin 25, un bec 24a dirigé vers l'autre mors 24, et également, à son extrémité opposée au bras 2, un bec 24b dirigé en sens opposé à l'autre mors 24.

On conçoit notamment qu'on peut adopter, pour l'immobilisation de l'agrafe le long du bras oscillant comme pour le déplacement du bâti par rapport à l'étrier ou coulisseau, des mécanismes de poussée et de réglage différents des vis 20 et 21 ci-dessus mentionnées.

## Revendications

1. Agrafe réglable pour l'assemblage pivotant des bras oscillants (2) d'une mécanique d'armure (3) avec les bielles d'attaque (4) du système de tirage associé aux cadres de lisses (CL) d'un métier à tisser, du genre comprenant un étrier (18) en forme de coulisseau qui est destiné à entourer sur trois côtés le bras oscillant (2) considéré engagé avec jeu à travers le bâti ajouré (15) de l'agrafe et qui est équipé d'un mécanisme de manoeuvre agencé pour agir sur des mors mobiles de serrage (24) disposés à l'intérieur dudit étrier d'un côté du bras, en vue d'assurer d'une part l'immobilisation de ce bâti le long du bras, d'autre part le réglage en position de ce bâti perpendiculairement à l'axe dudit bras, le bâti étant pourvu de deux premiers guides latéraux (17) pour deux mors (24) commandés à l'aide d'un premier coin central (25) disposé entre les extrémités libres des ailes dudit étrier, tandis que le mécanisme de manoeuvre comprend une vis (20) engagée dans un taraudage d'une entretoise (19) fixée entre les extrémités libres des ailes de l'étrier (18), caractérisée en ce que le bâti (15) est pourvu de deux seconds guides latéraux (16a) pour deux mors (23) disposés de l'autre côté du bras et associés à un second coin de manoeuvre (22) engagé dans le fond de l'étrier (18), et en ce que la vis (20) est agencée pour pousser ledit premier coin (25) vers le fond de l'étrier tout en tirant le second coin (22) dans le sens opposé.

2. Agrafe suivant la revendication 1, caractérisée en ce qu'entre la vis de poussée (20) et le coin central (25) est interposé un moyen élastique (26) qui agit sur ledit coin pour assurer par friction la retenue provisoire de l'agrafe le long du bras oscillant (2).

3. Agrafe suivant l'une quelconque des revendications 1 et 2, caractérisée en ce que la position du bâti (15) par rapport à l'étrier (18) est réglée, à la façon en soi connue, par une vis de réglage (21) à deux filets opposés coopérant avec deux oreilles latérales (17a et 19a) respectivement solidaires de l'entretoise (19) de l'étrier (18) et du bâti (15).

4. Agrafe suivant l'une quelconque des revendications 1 à 3, caractérisée en ce que le bâti (15) comprend une semelle (15) qui est solidaire à une extrémité d'un oeilleton (16) pourvu de deux saillies latérales (16a) formant lesdits premiers guides latéraux, et à l'autre extrémité de deux autres saillies latérales (17) formant lesdits seconds guides latéraux.

5. Agrafe suivant la revendication 4, caractérisée en ce que la semelle du bâti (15) est creusée d'une dépression Longitudinale (15a) formant guide pour l'étrier (18), tandis que les saillies ou guides (17) de ce bâti présentent un talon (17b) introduit entre Les deux ailes longitudinales dudit étrier.

6. Agrafe selon l'une quelconque des revendications précédentes, caractérisée en ce que ledit second coin (22) est disposé au fond dudit étrier (18).

7. Agrafe selon l'une quelconque des revendications précédentes, caractérisée en ce que ledit second coin (22) a des bords obliques aptes à coopérer avec lesdits mors associés (23).

8. Agrafe selon l'une quelconque des revendications précédentes, caractérisée en ce que ladite vis (20) est apte à agir par traction sur ledit étrier (18), sur ledit second coin (22) et sur lesdits mors associés (23).

9. Agrafe suivant l'une quelconque des revendications précédentes, caractérisée en ce que lesdits mors (23, 24) sont pourvus de becs d'imperdabilité (23a, 24a, 24b).

## Patentansprüche

1. Verstellbare Klammer für die Schwenkverbindung der Schwingarme (2) einer Schaftmaschine (3) mit den Hebeln (4) eines Ziehsystems, das den Schaftrahmen (CL) eines Webstuhls zugeordnet ist, einer solchen Art, die einen Bügel (18) in Form eines Schlittens umfaßt, der dazu dient, an drei Seiten den betrachteten Schwingarm (2) zu umgeben, der mit Spiel durch den durchbrochenen Träger (15) der Klammer hindurchgeht und die mit einem Betätigungsmechanismus versehen ist, der ausgebildet ist, um auf bewegliche Spannbacken (24) zu wirken, die im Inneren des Bügels an einer Seite des Armes angeordnet sind, um einerseits die Festlegung des Trägers längs des Armes und andererseits die Einstellung in Position des Trägers senkrecht zur Achse des Arms sicherzustellen, wobei der Träger mit zwei ersten seitlichen Führungen (17) für zwei Backen (24) versehen ist, die mit Hilfe eines ersten mittleren Keils (25) betätigt werden, der zwischen den freien Enden der Schenkel des Bügels angeordnet ist, während der Betätigungsmechanismus eine Schraube (20) umfaßt, die in das Gewinde eines Abstandssteges (19) eingreift, der zwischen den zwei freien Enden der Schenkel des Bügels (18) angeordnet ist,
**dadurch gekennzeichnet,**
daß der Träger (15) mit zwei zweiten seitlichen Führungen (16a) für zwei Backen (23) versehen ist, die auf der anderen Seite des Armes angeordnet sind und einem zweiten Betätigungskeil (22) zugeordnet sind, der mit dem Boden des Bügels (18) in Kontakt ist und daß die Schraube (20) ausgebildet ist, um den ersten Keil (25) zum Boden des Bügels zu drücken, wobei der zweite Keil (22) in die entgegengesetzte Richtung gezogen wird.

2. Klammer nach Anspruch 1, dadurch gekennzeichnet, daß zwischen der Schubschraube (20) und dem mittleren Keil (25) ein elastisches Mittel (26) angeordnet ist, das auf den Keil wirkt, um durch Reibung den provisorischen Halt der Klammer längs des Schwingarmes (2) sicherzustellen.

3. Klammer nach einem der Ansprüche 1 oder 2, dadurch gekennzeichnet, daß die Position des Trägeres (15) in Bezug auf den Bügel (18) in an sich bekannter Weise durch eine Einstellschraube (21) mit zwei entgegengesetzten Gewinden eingestellt wird, die mit zwei jeweils fest mit dem Steg (19) des Bügels (18) und dem Träger (15) verbundenen seitlichen Ohren (17a und 19a) zusammenarbeiten.

4. Klammer nach einem der Ansprüche 1 bis 3, dadurch gekennzeichnet, daß der Träger (15) eine Sohle (15) aufweist, die an einem Ende fest mit einem Auge (16) mit zwei seitlichen Vorsprüngen (16a), die die ersten seitlichen Führungen bilden und am anderen Ende mit zwei anderen seitlichen Vorsprüngen (17) verbunden ist, die die zweiten seitlichen Führungen bilden.

5. Klammer nach Anspruch 4, dadurch gekennzeichnet, daß die Sohle des Trägers (15) durch eine Längsvertiefung (15a) ausgehöhlt ist, die die Führung für den Bügel (18) bildet, während die Vorsprünge oder Führungen (17) dieses Trägers einen Stegansatz (17b) aufweisen, der zwischen die Längsschenkel des Bügels eingeführt ist.

6. Klammer nach einem der vorhergehenden Ansprüche, dadurch gekennzeichnet, daß der zweite Keil (22) am Boden des Bügels (18) angeordnet ist.

7. Klammer nach einem der vorhergehenden Ansprüche, dadurch gekennzeichnet, daß der zweite Keil (22) schräge Ränder aufweist, die geeignet sind, mit den zugeordneten-Backen (23) zusammenzuarbeiten.

8. Klammer nach einem der vorhergehenden Ansprüche, dadurch gekennzeichnet, daß die Schraube (20) geeignet ist, durch Zug auf den Bügel (18), auf den zweiten Keil (22) und auf die zugeordneten Backen (23) zu wirken.

9. Klammer nach einem der vorhergehenden Ansprüche, dadurch gekennzeichnet, daß die Backen (23, 24) mit Nasen (23a, 24a, 24b) für eine Unverlierbarkeit versehen sind.

## Claims

1. An adjustable clip for the pivoting assembly of the rocking levers (2) of a dobby mechanism (3) with the actuating rods (4) of the lifting system associated with the heald frames (CL) of a loom, of the type comprising a stirrup (18) in the form of a slide which is intended to surround on three sides the rocking lever (2) in question which is engaged with play across the openwork frame (15) of the clip and which is equipped with a manoeuvring mechanism arranged to act on mobile clamping jaws (24) which are arranged on the inside of said stirrup on one side of the lever, in order to ensure firstly the immobilisation of this frame along the lever, and secondly the adjustment in position of this frame perpendicular to the axis of said lever, the frame being provided with two first lateral guides (17) for two jaws (24) which are controlled by means of a first central wedge (25) arranged between the free ends of the wings of said stirrup, whereas the manoeuvring mechanism comprises a screw (20) engaged in an internal thread of a spacer (19) which is fixed between the free ends of the wings of the stirrup (18), characterised in that the frame (15) is provided with two second lateral guides (16a) for two jaws (23) which are arranged on the other side of the lever and are associated with a second manoeuvring wedge (22) engaged in the bottom of the stirrup (18), and in that the screw (20) is arranged to push said first wedge (25) towards the bottom of the stirrup while pulling the second wedge (22) in the opposite direction.

2. A clip according to Claim 1, characterised in that between the thrust screw (20) and the central wedge (25) there is interposed an elastic means (26) which acts on said wedge to ensure the temporary retention of the clip along the rocking lever (2) by friction.

3. A clip according to any one of Claims 1 and 2, characterised in that the position of the frame (15) relative to the stirrup (18) is adjusted, in a manner known *per se*, by an adjusting screw (21) having two opposing threads which cooperates with two lateral lugs (17a and 19a) integral respectively with the spacer (19) of the stirrup (18) and the frame (15).

4. A clip according to any one of Claims 1 to 3, characterised in that the frame (15) comprises a sole (15) which is integral with one end of an eye (16) provided with two lateral projections (16a) forming said first lateral guides, and at the other end with two other lateral projections (17) forming said second lateral guides.

5. A clip according to Claim 4, characterised in that the sole of the frame (15) is provided with a longitudinal depression (15a) forming a guide for the stirrup (18), whereas the projections or guides (17) of this frame have a heel (17b) introduced between the two longitudinal wings of said stirrup.

6. A clip according to any one of the preceding claims, characterised in that said second wedge (22) is arranged at the bottom of said stirrup (18).

7. A clip according to any one of the preceding claims, characterised in that said second wedge (22) has oblique edges suitable for co-operating with said associated jaws (23).

8. A clip according to any one of the preceding claims, characterised in that said screw (20) is suitable for acting by traction on said stirrup (18), on said second wedge (22) and on said associated jaws (23).

9. A clip according to any one of the preceding claims, characterised in that said jaws (23, 24) are provided with capturing projections (23a, 24a, 24b).
